Europäisches Patentamt

European Patent Office

Office européen des brevets

(19)

(11) EP 1 400 558 A1

(12) **EUROPEAN PATENT APPLICATION**
published in accordance with Art. 158(3) EPC

(43) Date of publication:
**24.03.2004 Bulletin 2004/13**

(51) Int Cl.⁷: **C08J 9/00**, C08J 9/26,
B29C 47/00

(21) Application number: **02726423.3**

(22) Date of filing: **15.05.2002**

(86) International application number:
**PCT/JP2002/004708**

(87) International publication number:
**WO 2002/092675 (21.11.2002 Gazette 2002/47)**

(84) Designated Contracting States:
**AT BE CH CY DE DK ES FI FR GB GR IE IT LI LU
MC NL PT SE TR**

(30) Priority: **16.05.2001 JP 2001145831**

(71) Applicant: **Asahi Kasei Kabushiki Kaisha
Osaka-shi, Osaka 530-8205 (JP)**

(72) Inventors:
• **AKAISHI, Kazuo
Moriyama-shi, Shiga 524-0021 (JP)**

• **TSUJIOKA, Norio
Otsu-shi, Shiga 520-2141 (JP)**

(74) Representative: **Weber, Thomas, Dr.Dipl.-Chem.
Patentanwälte
von Kreisler-Selting-Werner,
Postfach 10 22 41
50462 Köln (DE)**

(54) **PROCESS FOR PRODUCING POROUS POLYOLEFIN FILM**

(57) A method of producing a polyolefin porous film, including: a step of melt-kneading a resin which contains a polyolefin with a viscosity-average molecular weight of 300,000 or more as a main ingredient, together with a non-reactive gas using an extruder(s) (melt-kneading step); a step of forming the melt-kneaded resin into a non-porous solid resin form having an arbitrary shape (forming step); and a step of making the non-porous solid resin form porous (making-porous step).

EP 1 400 558 A1

# Description

## TECHNICAL FIELD

The present invention relates to a method of producing a polyolefin porous film suitably used for the applications such as a battery separator and a filter medium, in particular, to a method of producing a porous film formed of a material, such as high-molecular weight polyolefin, which is hard to extrude.

## BACKGROUND ART

Polyolefin porous films have been used as a battery separator, a capacitor diaphragm, a filter medium for water treatment, etc.

As a method of producing a polyolefin porous film, are known (1) a method in which a polyolefin is mixed with a pore forming agent such as an impalpable powder before forming the polyolefin film and the pore forming agent is extracted and removed after forming the polyolefin film, (2) a method in which a polyolefin film obtained by melt extruding a polyolefin is crystallized by heat treatment and then stretched to form pores therein, (3) a method in which amorphous part of a film impermeable to gas, obtained by melt extruding a polyolefin is dissolved by a solvent compatible with the polyolefin to form pores therein, and (4) a method in which a polyolefin film is formed from a solution obtained by mixing a polyolefin with a solvent and then extracting the solvent from the polyolefin film.

In recent years, to miniaturize equipment in which a polyolefin porous film is used and improve the performance of the same, a thinner and stronger polyolefin porous film has been demanded. It is known that a high-molecular weight polyolefin is used to enhance the strength of a polyolefin porous film.

However, a high-molecular weight polyolefin alone is difficult to extrude since it has an extremely high melt viscosity, and therefore in the methods of producing a polyolefin porous film described in (1) and (2), a polyolefin with a low molecular weight, which has been conventionally used, is used.

The method (3) of producing a polyolefin film, in which a polyolefin film is made porous by bringing the gas impermeable polyolefin film into contact with a solvent compatible with the polyolefin to dissolve the amorphous part of the polyolefin film, is a method of making a polyolefin with a low molecular weight porous, as is clear from one example of JP-A-55-161830 in which the polyolefin used is polyethylene with a weight average molecular weight less than 80,000.

Thus, a porous film using a high-molecular weight polyolefin has been produced by applying to the high-molecular weight polyolefin, the above method (4), in which a polyolefin film is formed from a mixed solution of a polyolefin and a solvent and made porous by extracting the solvent from the polyolefin film, as proposed in JP-B-5-54495 and JP-B-6-2841. In other words, a porous film has been produced following the steps of: mixing a high-molecular weight polyolefin with a solvent, generally known as plasticizer, which imparts plasticity to a high-molecular weight polyolefin to decrease the melt viscosity of the high-molecular weight polyolefin; extruding the high-molecular weight polyolefin with a decreased melt viscosity; and extracting the plasticizer from the extruded plasticizer containing film.

For example, in JP-B-5-54495, a method is proposed in which a high-molecular weight polyethylene porous film is produced by heat dissolving a high-molecular weight polyethylene in a solvent such as an aliphatic or cyclic hydrocarbon, such as nonane, decane, undecane, dodecane, decalin or paraffinic oils, or a mineral oil fraction whose boiling point corresponds to that of the above hydrocarbon, extruding the polyethylene into an extruded form, and removing the solvent from the extruded form. In JP-B-6-2841, a method is proposed in which a high-molecular weight polyethylene porous film is produced by forming a extruded form from a mixture of a high-molecular weight polyethylene and an aliphatic or alicyclic compound such as alcohols, ethers, ketones or esters and extracting the compound or alicyclic compound from the extruded form.

Lately, there has been proposed a method (5) of producing a high-molecular weight polyolefin porous film in which the above method (3), in which a polyolefin film is made porous by bring the polyolefin film into contact with a solvent compatible with the polyolefin to dissolve the amorphous part of the polyolefin by the solvent, is applied to a high-molecular weight polyolefin to produce a high-molecular weight polyolefin porous film.

For example, in JP-A-10-258462 and JP-A-2000-344930, a method of producing a high-molecular weight polyolefin porous film is proposed in which a high-molecular weight polyolefin is melted in a single screw extruder, the molten high-molecular weight polyolefin is extruded by the mandrel of the extruder with the rotation of the screw or by the tube die of the extruder that rotates independently. Air is blown into the extruded tubular high-molecular weight polyolefin to expand the same so that a gas impermeable film of the high-molecular weight polyolefin is formed, and a solvent compatible with polyolefin is brought into contact with the gas-non-permeable film to dissolve the same so that the film is made porous.

On the other hand, a method (6), as described in JP-A-2000-119432, has been proposed lately, as a method of producing a high-molecular weight polyolefin porous film different from the methods (4) and (5), which includes the steps of: dissolving a gas, which is in the gas state at normal temperature and pressure, in a high-molecular weight polyolefin; melt kneading the high-molecular weight polyolefin together with the gas in an extruder; extruding the gas-containing high-molecular weight polyolefin through a die at the tip of the extruder; and stretching the extruded high-molecular weight polyolefin to form a porous film.

The method (4) of producing a high-molecular weight polyolefin porous film, in which a high-molecular weight polyolefin and a plasticizer are melt kneaded in an extruder, uses a large amount of solvent. For this reason, a severe equipment and technical burden is forced on makers. Further, when a high-molecular weight polyolefin is mixed with a plasticizer, its viscosity is decreased with the decrease of its melting point; therefore, when trying to stretch a mixed composition of a high-molecular weight polyolefin and a plasticizer at temperatures higher than the melting point which the polyolefin originally has, the mixed composition is melted and ruptured. Thus, it is impossible to stretch the mixed composition at temperatures higher than the melting point originally possessed by the polyolefin. A porous film which is obtained by stretching the mixed composition at temperatures lower than the melting point originally possessed by the polyolefin and leaching out the plasticizer from the stretched composition, starts to shrink at temperatures lower than the melting point of the high-molecular weight polyolefin. As a result, when using the porous high-molecular weight polyolefin film as, for example, a battery separator, if the battery is overcharged and its temperature is raised, the porous film shrinks, before the high-molecular weight polyolefin melts and the pores of the porous film are blocked off. This increases the possibility of short-circuiting the electrodes in the battery.

In the method (5) of producing a high-molecular weight polyolefin porous film, a high-molecular weight polyolefin porous film is produced by bringing a gas impermeable polyolefin film, which is obtained by extruding a high-molecular weight polyolefin containing no plasticizer with a single screw extruder, into contact with a solvent compatible with the polyolefin so as to dissolve the amorphous part of the film, and hence make the film porous.

The melt viscosity of the high-molecular weight polyolefin containing no plasticizer is extremely high; therefore, when extruding the high-molecular weight polyolefin containing no plasticizer at the ordinary speed, the viscous heat becomes immoderately large which is generated due to the stirring and mixing of the high-molecular weight polyolefin caused by the rotary motion of the screw and the mandrel of the die. As a result, the heat energy required for the reaction that cuts the molecules of the high-molecular weight polyolefin is accumulated inside the molten high-molecular weight polyolefin, and the molecules of the high-molecular weight polyolefin are cut when they are extruded, resulting in the decrease in the molecular weight of the high-molecular weight polyolefin.

In order to avoid this, it is necessary to decrease the rotational speed of both the screw of the single screw extruder and the mandrel of the die and carry out the extrusion while minimizing the viscous heat value. This is apparent from, for example, the description of one example of the invention disclosed in JP-A-10-237201 that when extruding high-molecular weight polyethylene with a single screw extruder whose screw outer diameter is 50 mm, the extruder screw is rotated at an extremely low rotational speed of 15 rpm.

In the method in which a resin is extruded by rotating the extruder screw of a single screw extruder at a low speed, it becomes difficult to melt the raw resin uniformly. Particularly when using a high-molecular weight polyolefin, which is hard to melt compared with a polyolefin with a low molecular weight. The unmelted resin remains in the extruded resin as granular solid matter.

Further, when extruding a raw resin which is a blend of resins of differing melt temperatures and molecular weights stirring action which is achieved in the extruding is not sufficient to perform the entanglement of molecules which have the differing molecular weight. For this insufficient stirring action, problems may be encountered of being unable to melt the resins with high melt temperatures and extruding them in the form of a granular solid matter and of being unable to stretch the extruded resin at a high draw ratio since the extruded resin is ruptured at resin-resin interfaces. Being unable to stretch the extruded resin at a high draw ratio causes the film obtained by the stretching to have low strength. In extreme cases, the extruded resin sometimes cannot be stretched.

In the above method (6) in which a porous film is obtained by the steps of: dissolving a gas, which is in the gas state at normal temperature and pressure, in a high-molecular weight polyolefin; melt-kneading the high-molecular weight polyolefin in an extruder; extruding the gas containing high-molecular weight polyolefin through a die at the tip of the extruder; and stretching the extruded high-molecular weight polyolefin, the gas contained in the high-molecular weight polyolefin allows the high-molecular weight polyolefin to be foamed and the stretching operation allows bubbles generated by the foaming to communicate with each other and causes the pore diameter to increase, which results in a porous film. In this method, if the temperature at which the stretching is carried out exceeds the melting point of the resin to be stretched, the number of the bubbles broken by the melting of the resin becomes larger than that of the bubbles allowed to communicate with each other; as a result, the porosity of the obtained porous film becomes low. This is apparent from the description in JP-A-2000-119432 that the stretching is carried out at temperatures lower than the melting point of the resin and the description of the example of the invention that the stretching of high-molecular weight polyethylene is carried out at 120°C, which is lower than the melting point of high-molecular weight polyethylene.

A porous film obtained by carrying out stretching at temperatures lower than the melting point of the high-molecular weight polyolefin, as described above, starts to shrink at temperatures lower than the melting point of the high-molecular weight polyolefin. As a result, when using such a porous film as, for example, a battery separator, if the battery is overcharged and its temperature is raised, the porous film shrinks, before the high-molecular weight polyolefin melts and the pores of the porous film are blocked off. This increases the possibility of short-circuiting the electrodes in the battery. Further, in the above method (6), stretching the high-molecular weight polyolefin has the effect of increasing the film strength due to the molecular orientation, and at the same time, it has the adverse effect of decreasing the film strength due to the increase in pore diameter. With the increase in the draw ratio, the decrease in the film strength due to the increase in pore diameter, becomes larger than the increase in the film strength due to the molecular orientation. This prevents the draw ratio from being increased, resulting in insufficient increase in the porosity of the porous film by stretching. This is clear from the description of the example of the invention disclosed in JP-A-2000-119432 wherein the draw ratio is as extremely low as ×4 and the porosity of the resultant porous film is as low as 35.6%. Accordingly, the above method (6) is not suitable for obtaining a porous film, though it is useful as a method of obtaining a foam whose expansion ratio is low.

DISCLOSURE OF THE INVENTION

The inventors of the present invention have thus directed their tremendous research efforts toward developing a method of obtaining a porous film from a raw resin, which contains a high-molecular weight polyolefin as a main ingredient, at a high production rate while avoiding the use of a plasticizer, a solvent and a compound of a low molecular weight, which have been used when extruding a high-molecular weight polyolefin in accordance with the prior art. As a result, we have found that a high-molecular weight polyolefin porous film can be obtained at a uniform and high production rate following the steps of: melt-kneading a resin, which contains a high-molecular weight polyolefin as a main ingredient, together with a non-reactive gas; forming the melt-kneaded resin, while avoiding foaming the resin, into a non-porous solid resin form; and making the obtained non-porous solid resin form porous. This finding has led to this invention.
Specifically, this invention relates to:

(1) a method of producing a polyolefin porous film, comprising: a step of melt-kneading a resin which contains a polyolefin with a viscosity-average molecular weight of 300,000 or more as a main ingredient, together with a non-reactive gas using an extruder(s) (melt-kneading step); a step of forming the melt-kneaded resin into a non-porous solid resin form having an arbitrary shape (forming step); and a step of making the non-porous solid resin form porous (making-porous step);

(2) the method according to the above (1), further comprising, between the melt-kneading step and the forming step, a step of removing the non-reactive gas from the melt-kneaded resin;
(3) the method according to the above (1), further comprising, between the melt-kneading step and the forming step, a step of cooling the melt-kneaded resin to a temperature that allows the gas to remain in the melt-kneaded resin;
(4) the method according to any one of the above (1) to (3), wherein the making-porous step is a step of making the non-porous solid resin form porous by heat treating the same with a liquid that selectively dissolves any amorphous part of the polyolefin; and
(5) a method of producing a polyolefin porous film, comprising: melt-kneading a resin which comprises a polyolefin with a viscosity-average molecular weight of 300,000 or more, together with a non-reactive gas and extruding the resin into a non-porous solid resin using an extruder; removing the non-reactive gas from the extruded non-porous solid resin; and then subjecting the non-porous solid resin from which the non-reactive gas has been removed, to a making-porous treatment.

BEST MODE FOR CARRYING OUT THE INVENTION

In the following, the present invention will be described in detail from its raw materials to production process in this order.

a. Resin

The resin used in this invention is a resin that contains a polyolefin with a viscosity-average molecular weight of 300,000 or more as a main ingredient.
To enhance the strength of the formed product, it is necessary that the resin used in this invention contains a polyolefin with a viscosity-average molecular weight of 300,000 or more as a main ingredient, and preferably it contains a polyolefin with a viscosity-average molecular weight of 500,000 to 3,000,000. As the polyolefin, are preferable homopolymers and copolymers obtained by polymerizing one kind or two or more kinds of monomers selected from the group consisting of ethylene, propylene and α-olefin and the blended polymers thereof. Of the above, linear polyethylene and propylene are particularly preferable.
The viscosity-average molecular weight used in this invention is Mv obtained as follows. Specifically, the viscosity-average molecular weight (Mv) is calculated by using the following equation:

$$[\eta] = 0.00068 \times Mv^{0.67}$$

after measuring [η] at a measuring temperature of 135°C using decalin as a solvent.

To the resin used in this invention, various kinds of additives such as an antioxidant, a nucleator and an inorganic filler are added as the need arises.

In order to improve properties, such as heat resistance and strength, of the resin used in this invention, not only a polyolefin alone, but also a blend of a polyolefin with modified polyethylene with maleic anhydride etc. grafted thereon, modified polyphenylene ether resin or polyamide resin may be used. In that case, to obtain a uniform blend of the above resin and a polyolefin, a compatibilizing agent is added as the need arises. As the resin, however, a polyolefin is preferable.

b. Non-reactive Gas

In this invention, as the gas to be mixed into a resin, which contains a polyolefin as a main ingredient, when intending to uniformly melt and knead the resin with an extruder, those gases are preferably used which are in the gas state at normal temperature and pressure; do not react with the resin that contains a polyolefin as a main ingredient; and decrease the viscosity of the resin when they are dissolved in the resin. For example, carbon dioxide gas and nitrogen gas are preferably used because they are inexpensive and easy to handle. These gases may be used individually or in combination. Of the two, carbon dioxide gas is more preferable because its solubility in the polyolefin is high and its effect of decreasing the resin viscosity is large.

c. Step of Melt-kneading Resin with Non-reactive Gas

The method of producing a polyolefin porous film of the present invention includes a step of melt-kneading a resin, which contains a polyolefin with a viscosity-average molecular weight of 300,000 or more, together with a non-reactive gas using an extruder.

As the extruder which melt-kneads a resin together with a non-reactive gas, a single screw extruder, a co-rotating twin-screw extruder and a counter-rotating twin-screw extruder can be used individually or more than one of them in combination.

When kneading and extruding a resin, which contains a resin other than the polyolefin along with a polyolefin as a main ingredient, together with a non-reactive gas, in order to obtain a uniform resin from a blended resin, as a raw material, of different raw resins, it is preferable to use a co-rotating twin-screw extruder, whose capability to melt-knead is large.

When injecting a non-reactive gas into an extruder, the gas in the gas state in a steel gas cylinder may be injected into the extruder directly from the cylinder; however, it is preferable to feed the non reactive gas in the cooled and liquid state into the extruder in a fixed quantity while applying a pressure to the same with a plunger pump etc. To dissolve the non-reactive gas uniformly in the resin, it is more preferable to inject the gas in the critical state into the extruder.

As for the extruder screw, preferably its shape is established so that the resin pressure generated with the flow of the resin in the extruder is higher than the injection pressure of the non-reactive gas in the area between the resin feed opening and the non-reactive gas injection hole of the extruder, so as to prevent the non-reactive gas injected into the extruder from flowing out through the resin feed opening provided on the cylinder of the extruder. For example, when using a co-rotating twin-screw extruder, it is preferable to use a reverse screw element or a kneading disc for the screw element positioned nearer the resin feed opening than the injection hole for the non-reactive gas. Further, in order to make it easy to dissolve the non-reactive gas having been injected into the extruder in the resin that flows toward the outlet of the extruder, it is preferable to use a screw element such as a notched screw or a collar, which permits the resin to stay therein for a longer time and has a high kneading function, for the screw element positioned in the area between the injection hole for the non-reactive gas and the outlet of the extruder.

d. Step of Forming Solid Resin Form

The method of producing a polyolefin porous film of the present invention includes a step of forming a resin, which contains a polyolefin with a viscosity-average molecular weight of 300,000 or more as a main ingredient, into a non-porous solid resin form having an arbitrary shape, while avoiding the foaming of the resin.

The term "non-porous solid resin form" herein used means a resin form formed of the above resin in which there are observed under an electron microscope no bubbles formed due to the expansion of the gas having been mixed into the resin form.

In this invention, to form a non-porous solid resin form having an arbitrary shape, an extruder with a die fitted on its tip is used.

In this invention, to extrude a non-porous solid resin form having an arbitrary shape with an extruder, the following two methods are used individually or in combination.

> d-1. A method in which a raw resin is extruded into a form having an arbitrary shape after the non-reactive gas having been mixed into the resin is removed.
>
> d-2. A method in which a raw resin is extruded into a form having an arbitrary shape while it is cooled to such a degree that the non-reactive gas can be included in the resin, so that the non-reactive gas is not expanded.

Method of d-1 in which a solid form is formed after the non-reactive gas is removed

In this invention, either method may be adopted which uses an extruder including a gas discharge opening, generally known as vent port, provided on its cylinder or which uses more than one extruder, generally know as a tandem extruder.

When using an extruder with a vent port for extruding a resin, after removing the non-reactive gas mixed into the resin, into a non-porous extruded form having an arbitrary shape, it is preferable to position the vent port on the extruder cylinder near the outlet of the extruder relative to the position to uniformly melt-knead the resin having been plasticized by the dissolution of the non-reactive gas. When the molten resin erupts from the vent port together with the non-reactive gas, a screw-type feeder, generally known as a vent stuffer, can be fitted on the vent port to remove the non-reactive gas to the outside of the extruder while preventing the resin from flowing from the extruder.

When using an extruder with a vent port, if an injection hole through which a non-reactive gas is injected is provided at the position on the raw resin feeding side of the extruder cylinder, the step of melt-kneading the resin with the non-reactive gas and the step of removing the non-reactive gas from the resin to form the resin into a solid resin form can be carried out in a single extruder.

When using a tandem extruder for extruding a resin, after removing the non-reactive gas mixed into the resin, into a non-porous extruded form having an arbitrary shape, for the front extruder, an extruder with an injection hole, through which a non-reactive gas is injected, is used to carry out the step of melt-kneading the resin together with the non-reactive gas.

When using a tandem extruder for extruding a resin, after removing the non-reactive gas mixed into the resin, into a non-porous solid resin form, for the rear extruder, an extruder with a vent port is used, and the non-reactive-gas-containing resin which is extruded from the front extruder is fed to the rear extruder and the resin is extruded while removing the non-reactive gas through the vent port of the rear extruder.

Alternatively, when using an extruder without a vent port for the rear extruder of a tandem extruder, if the front extruder and the rear extruder are connected with a vacuum chamber or a portion open to the atmosphere is provided on their connecting portion, the non-reactive-gas-containing resin which is extruded from the front extruder can be fed to the rear extruder while removing the non-reactive gas, and the resin from which the non-reactive gas has been removed can be extruded from the rear extruder into a solid resin form having an arbitrary shape.

The resin from which the non-reactive gas has been removed is extruded through the die fitted on the tip of the extruder into a non-porous solid resin form having an arbitrary shape.

As the die, can be used any die selected from among sheet dies such as a slit die, a T-die and a fishtail die, tube dies such as a spiral die, a spider die and a screw die where the mandrel rotates, and a hollow spinneret, which is suitable for the shape of the solid resin form.

d-2. Method in which a solid resin form is formed while cooling the raw resin

In this invention, a non-porous solid resin form can be formed by extruding a resin, which has been melt-kneaded together with a non-reactive gas in an extruder, through a die fitted on the tip of the extruder while avoiding foaming the resin.

To extrude a non-reactive-gas-containing resin from a die while avoiding foaming the resin, the temperature of the inner wall of the die is adjusted to a temperature lower than that of the resin flowing into the die, so that the non-reactive-gas-containing resin in the die is cooled to a temperature that allows the non-reactive gas to remain in the resin while avoiding foaming the resin even when the resin is extruded at atmospheric pressure.

The temperature that allows a gas to remain in a resin varies depending on the combination of the resin and gas used and the conditions under which extrusion is carried out. Therefore, an approach is adopted to repeat extrusions while varying the temperature of the die to find the temperature of the die that allows the gas to remain in the resin while avoiding foaming of the resin, and at the same time, allows such a resin to be extruded. To find the temperature of the die, the peak temperature in the resin crystallization measured with a differential scanning calorimeter (DSC) can be used as a reference.

The non-reactive gas is removed from the non-reactive-gas-containing non-porous solid resin form which has been extruded while avoiding foaming the resin so that the resin should not be foamed when the solid resin form is heated in the stretching and making-porous steps subsequent to the forming step. The non-reactive gas transpires from the solid resin form, if the non-reactive-gas-containing non-porous solid resin form is stored at normal temperatures. No special equipment need be prepared to remove the non-reactive gas. To remove the non-reactive gas efficiently, the non-reactive-gas-containing non-porous solid resin form may be stored in a depressurized container or chamber.

e. Step of Making Solid Resin Form Porous

A porous film is obtained by subjecting to making-porous treatment the non-porous solid resin form formed by the above described method. The making-porous treatment methods will be described below.

One making-porous treatment method is to stretch the non-porous solid resin form, after heat treating the same to enhance its crystallinity, so that rupture is caused among the lamellas of the polyolefin. Another method is to heat treat the non-porous solid resin form, which contains a polyolefin as a main ingredient, in a liquid (a) that selectively dissolves or melts the amorphous part of the polyolefin, wash the resin form with a liquid (b), which is compatible with the liquid (a) but does not dissolve the resin form, to remove the liquid (a), and dry the resin form.

As the liquid (a), hydrocarbons such as paraffin oil, lower aliphatic alcohols, lower aliphatic ketones, nitrogen-containing organic compounds, ethers, glycols, lower aliphatic esters and silicone oil can be used individually or in combination. As for the preferred heat treatment temperature, though it depends on the types of the polyolefin and the liquid (a), when the polyolefin is, for example, polyethylene, it is 100°C to 140°C. The heat treatment duration can be decreased if the treatment temperature is high. In order to maintain the strength of the resin having been subjected to making-porous treatment, the shorter the treatment duration, the more preferable.

As the liquid (b), low boiling point hydrocarbons such as hexane, fluorine organic solvents free of chlorine such as hydrofluoroether and hydrofluorocarbon, and ketons such as methyl ether ketone can be preferably used. A high-molecular weight polyolefin may be stretched in the liquid (a) or stretched after it is washed in the liquid (b) and dried to adjust the size and number of the pores of the porous film obtained. In order to eliminate the sagging of the high-molecular weight polyolefin in the liquid, the speed of drawing off the resin after it is brought into contact with the liquid may be made higher than that of feeding the resin to bring the same into contact with the liquid.

Among these making-porous treatment methods, the former method, which uses stretching, requires large size equipment since the stretching stress when stretching a high-molecular weight polyolefin is large. Therefore, the latter method, which dissolves the amorphous part of the polyolefin with a solvent compatible with the polyolefin, is more preferable as a method of making a high-molecular weight polyolefin porous.

f. Step of Stretching

In this invention, in order to enhance the strength of a porous film utilizing its molecular orientation and to make the same thinner, stretching may be carried out. To merely enhance the strength of a film, it is preferable to carry out stretching before treating the film to make it porous; however, if stretching is carried out after the making-porous treatment, the pore diameter and thickness of the porous film can be adjusted. Therefore, stretching may be carried out either before or after, or both before and after, the making-porous treatment.

The stretching methods include a flat stretching method and a tubular stretching method. When high thickness accuracy and frequent adjustment of draw ratio are required, flat stretching is preferable, whereas when intending to decrease the cost of equipment, tubular stretching is preferable. Either method can be selected appropriately.

The flat stretching method includes: uni-axial stretching in which stretching is carried out in either the machine or the transverse direction; and biaxial stretching in which stretching is carried out in both the machine and the transverse directions. The uni-axial stretching and the biaxial stretching can be adopted individually or in combination. The biaxial stretching includes: sequential stretching in which stretching is carried out in one direction and then in the other direction; and co-stretching in which stretching is carried out in both directions at the same time. The sequential stretching and the co-stretching can be adopted individually or in combination.

Embodiments of the present invention will be described in several examples.

The evaluation of the physical properties of the porous film obtained in each example was carried out as follows.

(a) Thickness

The thickness of the porous film was measured with a dial gauge, PEACOK No. 25 by Ozaki MFG Co., Ltd.

(b) Porosity

The porosity of the porous film was calculated from its volume obtained from its thickness and area and its measured weight by using the following equation.

$$\text{porosity (\%)} = (1 - (\text{weight/resin density})/\text{volume}) \times 100$$

(c) Puncture Strength

The maximum sticking load was obtained by carrying out a sticking test at a sticking speed of 2 mm/sec using a compression tester, KES-G5 by Kato Tech Co., Ltd., with a needle having a radius of curvature of 0.5 mm fitted on its tip, and its value was taken as the puncture strength (g).

(d) Air Permeability

The air permeability of the porous film was measured with a Gurley's permeability tester in accordance with JIS P-8117.

Example 1

A co-rotating twin-screw extruder made up of a cylinder with 15 cylinder blocks (L/D ratio of 3) connected thereto and two screws 35 mm in diameter was used with a gear pump and a slit die, whose slit width was 100 mm and slit clearance was 1 mm, fitted on its tip.

Ultra-high-molecular-weight polyethylene with a viscosity-average molecular weight of 1,000,000 was fed at a feeding rate of 5 kg/hour using a weighing feeder from the feed opening provided on the most upstream cylinder block of the twin-screw extruder. Gas taken out of a liquified carbon dioxide steel gas cylinder was passed through a tube which was immersed in a bath filled with ethylene glycol cooled with a refrigeration machine. A pressure of 10 MPa was applied to the gas with a plunger pump to inject the gas at an injection rate of 500 g/hour from an injection hole provided on the sixth cylinder block from the most upstream side. The non-reactive gas in the extruder was discharged from a vent port provided on the third cylinder block from the most downstream side of the twin-screw extruder.

The current of the electric heater and the amount of the cooling water of the cylinder of the twin-screw extruder and the slit die were adjusted so that the temperatures of the cylinder and the slit die were 200°C.

The screws of the twin-screw extruder were rotated at a rotational speed of 300 rpm, and the resin extruded from the slit die was drawn-off by water-cooled nip rollers to obtain a sheet-like sample.

When observing the section of the sample under an electron microscope, it was confirmed that the sample contained no bubbles cause by the expansion of the carbon dioxide. The extruded sample was cut to length of 50 cm in succession, weighed, and stored in a vacuum dryer set at 30°C and 6 cmHg. When weighing the sample after 8-hour storage, the weight was the same as that of the sample before the storage.

The measured value of the viscosity-average molecular weight of the sheet-like sample was 980,000.

The sample was subjected to biaxial stretching with a biaxial stretching machine by Iwamoto Co, Ltd. The stretching speed was 10 mm/sec. The stretching was carried out while varying the stretching temperature from 120°C to 150°C in increments of 5°C to obtain the maximum draw ratio immediately before the sample was ruptured at each stretching temperature.

The stretching condition under which the draw ratio became highest was 135°C and the ratio was $\times 10$ in length and breadth.

The stretched (at maximum draw ratio) thin film was dipped in liquid paraffin heated to 130°C for 30 seconds, immersed in methyl ethyl ketone for 24 hours to remove the liquid paraffin, and dried at normal temperature and pressure for 24 hours.

The dried thin film had a thickness of 17 μm, a porosity of 45%, a air permeability of 320 seconds, and a puncture strength of 520 g.

Example 2

Ultra-high-molecular-weight polyethylene with a viscosity-average molecular weight of 1,000,000 was extruded under the same conditions as Example 1 except that the slit die of Example 1 was replaced with a cylindrical die whose toroidal slit has an outer diameter of 10 mm and an inner diameter of 8 mm. Compressed air was fed into the resin having been extruded in the tubular form through a tube provided in the inner die of the cylindrical die to carry out tubular stretching. The temperature of the resin extruded in the tubular form was controlled by cooling the resin in such a manner as to provide an air ring outside of the resin and blow off air, whose temperature was adjusted to 20°C, from the air ring so that the tubular stretching was started at a fixed position. The thin film having been subjected to tubular stretching was folded by a deflator roll and drawn-off through the nip of a metal roller and a rubber roller.

The stretched and folded two-ply thin film was 142 mm in width and the toroidal slit of the cylindrical die was 10 mm in outer diameter; accordingly, the draw ratio in the width direction was x9. The draw ratio in the machine direction was 9.5 which was obtained from the ratio of the linear speed, calculated from the area of the toroidal slit of the cylindrical die and the extrusion rate, of the resin extruded from the cylindrical die to the draw-off speed of the nip rollers.

The thin film having been subjected to tubular stretching was treated under the same conditions as Example 1 so that it was made porous. The obtained porous film had a thickness of 16 μm, a porosity of 47%, a air permeability of 290 seconds, and puncture strength of 470 g.

Example 3

A tandem extruder was used whose front extruder was a co-rotating twin-screw extruder made up of a cylinder with 15 cylinder blocks (L/D ratio of 3) connected thereto and a screw 35 mm in diameter and rear extruder was a single screw extruder which had a bore of 70 mm and a L/D ratio of 10 and was provided with a vent port in the middle of its cylinder.

Ultra-high-molecular-weight polyethylene with a viscosity-average molecular weight of 1,000,000 was fed at a feeding rate of 5 kg/hour using a weighing feeder from the feed opening provided on the most upstream cylinder block of the twin-screw extruder. Carbon dioxide gas to which a pressure of 10 MPa was applied with the same equipment as Example 1 was injected at an injection rate of 500 g/hour from an injection hole provided on the sixth cylinder block from the most upstream side of the twin-screw extruder.

The current of the electric heater and the amount of the cooling water of the cylinder of the twin-screw extruder were adjusted so that the temperature of the cylinder was 200°C. The screws of the twin-screw extruder were rotated at a rotational speed of 300 rpm, and the resin extruded from the outlet of the twin-screw extruder was fed to the polymer feed opening of the single screw extruder before it was cooled and set up.

A vacuum pump was connected to the vent port of the single screw extruder to discharge the gas in the single screw extruder. The single screw extruder was used with a slit die, whose slit width was 100 mm and slit clearance was 1 mm, fitted on its tip. The current of the electric heater and the amount of the cooling water of the cylinder of the single screw extruder and the slit die were adjusted so that the temperature of the cylinder of the single screw extruder was 200°C and the temperature of the slit die was 200°C.

The screw of the single screw extruder was rotated at a rotational speed of 60 rpm, and the polyethylene resin was extruded from the slit die to obtain a sheet-like sample.

When observing the section of the sample under an electron microscope, it was confirmed that the sample contained no bubbles. The extruded sample was cut to length of 50 cm in succession, weighed, and stored in a vacuum dryer set at 30°C and 6 cmHg. When weighing the sample after 8-hour storage, the weight was the same as that of the sample before the storage.

The measured value of the viscosity-average molecular weight of the sheet-like sample was 990,000.

The sample was subjected to biaxial stretching with a biaxial stretching machine by Iwamoto Co, Ltd. The stretching speed was 10 mm/sec. The stretching was carried out while varying the stretching temperature from 120°C to 150°C in increments of 5°C to obtain the maximum draw ratio immediately before the sample was ruptured at each stretching temperature.

The stretching condition under which the draw ratio became highest was 135°C and the ratio was ×10 in length and breadth.

The stretched (at maximum draw ratio) thin film was dipped into liquid paraffin heated to 130°C for 30 seconds, immersed in methyl ethyl ketone for 24 hours to remove the liquid paraffin, and dried at normal temperature and pressure for 24 hours.

The dried thin film had a thickness of 16 μm, a porosity of 47%, a air permeability of 270 seconds, and a puncture strength of 480 g.

Example 4

A co-rotating twin-screw extruder, made up of a cylinder with 15 cylinder blocks (L/D ratio of 3) connected thereto and two screws 35 mm in diameter, was used with a gear pump and a slit die, whose slit width was 100 mm and slit clearance was 1 mm, fitted on its tip.

High-density polyethylene with a viscosity-average molecular weight of 400,000 was fed at a feeding rate of 5 kg/hour using a weighing feeder from the feed opening provided on the most upstream cylinder block of the twin-screw extruder. Carbon dioxide gas, to which a pressure of 10 MPa was applied with the same equipment as Example 1, was injected at an injection rate of 500 g/hour from an injection hole provided on the sixth cylinder block from the most upstream one of the twin-screw extruder.

The current of the electric heater and the amount of the cooling water of the cylinder of the twin-screw extruder and the slit die were adjusted so that the temperature of the cylinder of the extruder was 200°C and that of the slit die was 120°C. The screws of the twin-screw extruder were rotated at a rotational speed of 300 rpm, and the polyethylene was extruded from the slit die to obtain a sheet-like sample. When observing the section of the sample under an electron microscope, it was confirmed that the sample was a solid resin form. The extruded sample was cut off to length of 50 cm in succession, weighed, and stored in a vacuum dryer set at 30°C and 6 cmHg. The sample after 8-hour storage was weighted and checked to see if the degree of decrease in weight is 0.1% or lower of the weight before the storage. When the degree is higher than 0.1%, the sample was stored in the vacuum drier for another 8 hours, and the storage and the confirmation of the decrease in weight were repeated until the degree of decrease in weight was 0.1% or lower.

The measured value of the viscosity-average molecular weight of the sample, whose degree of decrease in weight was 0.1% or lower, was 390,000.

The sample was subjected to biaxial stretching with a biaxial stretching machine by Iwamoto Co, Ltd. The stretching speed was 10 mm/sec. The stretching was carried out while varying the stretching temperature from 120°C to 150°C in increments of 5°C to obtain the maximum draw ratio immediately before the sample was ruptured at each stretching temperature. The stretching condition under which the draw ratio became highest was 135°C and the ratio was ×10 in length and breadth.

The stretched (at maximum draw ratio) thin film was dipped into liquid paraffin heated to 130°C for 30 seconds, immersed in methyl ethyl ketone for 24 hours to remove the liquid paraffin, and dried at normal temperature and pressure for 24 hours.

The dried thin film had a thickness of 15 μm, a porosity of 48%, a air permeability of 260 seconds, and a puncture strength of 450 g.

Example 5

Ultra-high-molecular-weight polyethylene with a viscosity-average molecular weight of 3,300,000 and high-density polyethylene with a viscosity-average molecular weight of 300,000 were blended at a ratio of 50% by weight: 50% by weight. The viscosity-average molecular weight of the blended resin was 1,050,000. Extrusion was carried out under the same conditions as Example 1 except that this blended resin was used, and a sheet-like sample was obtained which was a solid resin in which no bubbles were observed under an electron microscope. The measured value of the viscosity-average molecular weight of the sample was 1,010,000.

The sample was subjected to biaxial stretching with the same biaxial stretching machine as Example 1. The draw ratio became largest at 140°C, ×10 in length and breadth. The stretched thin film was treated in the same manner as Example 1 so that it was made porous. The obtained thin film had a thickness of 15 μm, a porosity of 47%, a air permeability of 280 seconds, and a puncture strength of 510 g.

Comparative Example 1

Ultra-high-molecular-weight polyethylene with a viscosity-average molecular weight of 1,000,000 was extruded using the same extruder as Example 1 without injecting carbon dioxide thereinto. The extrusion was carried out under the same conditions of the cylinder temperature, die temperature and rotational speed of the extruder screws as Example 1.
The temperature of the resin at the outlet of the extruder was increased to as high as 320°C, while the temperature of the same was 265°C in Example 1, which caused a change in the color of the resin extruded from the die to yellowish brown. The measured value of the viscosity-average molecular weight of the extruded resin was 240,000.

Comparative Example 2

High-density polyethylene with a viscosity-average molecular weight of 400,000 was extruded using the same extruder as Example 4 under the same conditions as Example 1 except that the temperature of the die was set at 200°C. The resin extruded from the die was foamed, and when observing its section under an electron microscope after cooling the same, a large number of bubbles several tens of μm in size were observed. When trying to subject the foamed resin to biaxial stretching at a stretching temperature of 135°C with the same biaxial stretching machine as Example 1, the resin was ruptured immediately after starting the stretching and could not be stretched.

Comparative Example 3

The same resin as used in Example 5, a blended resin of ultra-high-molecular-weight polyethylene with a viscosity-average molecular weight of 3,300,000 and high-density polyethylene with a viscosity-average molecular weight of 300,000 at a blend ratio of 50% by weight : 50% by weight, was extruded at an extrusion rate of 5 kg/hour using a single screw extruder made up of a screw 30 mm in outer diameter and a grooved cylinder with a L/D ratio of 34, equipped with the same slit die as used in Example 5. The extrusion was carried out by setting the temperature of the extruder cylinder at 280°C, rotational speed of the screw at 15 rpm, and the temperature of the slit die at 200°C. The measured value of the viscosity-average molecular weight of the sheet-like sample extruded was 750,000. When trying to stretch the sheet-like sample in the stretching temperature range of 120°C to 150°C using the same biaxial stretching machine as Example 3, the resin was ruptured as if it had been torn off. And the resin could not be stretched at any temperatures.

INDUSTRIAL APPLICABILITY

The method of producing a polyolefin porous film of the present invention is extremely useful as a method of producing a polyolefin porous film, which has a high strength and is hard to shrink until it is heated to high temperatures, while keeping high the molecular weight of the resin which contains a high-molecular weight polyolefin as a main ingredient.

**Claims**

1. A method of producing a polyolefin porous film, comprising: a step of melt-kneading a resin, which contains a polyolefin with a viscosity-average molecular weight of 300,000 or more as a main ingredient, together with a non-reactive gas using an extruder(s) (melt-kneading step); a step of forming the melt-kneaded resin into a non-porous solid resin form having an arbitrary shape (forming step); and a step of making the non-porous solid resin form porous (making-porous step).

2. The method according to claim 1, further comprising, between the melt-kneading step and the forming step, a step of removing the non-reactive gas from the melt-kneaded resin.

3. The method according to claim 1, further comprising, between the melt-kneading step and the forming step, a step of cooling the melt-kneaded resin to a temperature that allows the gas to remain in the melt-kneaded resin.

4. The method according to any one of claims 1 to 3, wherein the making-porous step is a step of making the non-porous solid resin form porous by heat treating the same with a liquid that selectively dissolves any amorphous part of the polyolefin.

5. A method of producing a polyolefin porous film, comprising: melt-kneading a resin which comprises a polyolefin with a viscosity-average molecular weight of 300,000 or more, together with a non-reactive gas and extruding the resin into a non-porous solid resin using an extruder; removing the non-reactive gas from the extruded non-porous solid resin; and then subjecting the non-porous solid resin from which the non-reactive gas has been removed, to a making-porous treatment.

## INTERNATIONAL SEARCH REPORT

| | International application No. |
|---|---|
| | PCT/JP02/04708 |

**A. CLASSIFICATION OF SUBJECT MATTER**
Int.Cl$^7$  C08J9/00, 9/26, B29C47/00

According to International Patent Classification (IPC) or to both national classification and IPC

**B. FIELDS SEARCHED**

Minimum documentation searched (classification system followed by classification symbols)
Int.Cl$^7$  C08J9/00, 9/26, B29C47/00

Documentation searched other than minimum documentation to the extent that such documents are included in the fields searched

| | | | |
|---|---|---|---|
| Jitsuyo Shinan Koho | 1926–1996 | Jitsuyo Shinan Toroku Koho | 1996–2002 |
| Kokai Jitsuyo Shinan Koho | 1971–2002 | Toroku Jitsuyo Shinan Koho | 1994–2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 11-116721 A  (Sekisui Chemical Co., Ltd.), 27 April, 1999 (27.04.99), Claims (Family: none) | 1–5 |
| A | JP 11-147246 A  (Sekisui Chemical Co., Ltd.), 02 June, 1999 (02.06.99), Claims (Family: none) | 1–5 |
| A | JP 2000-127194 A  (Sekisui Chemical Co., Ltd.), 09 May, 2000 (09.05.00), Claims (Family: none) | 1–5 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 August, 2002 (07.08.02) | 20 August, 2002 (20.08.02) |

| Name and mailing address of the ISA/ | Authorized officer |
|---|---|
| Japanese Patent Office | |
| Facsimile No. | Telephone No. |

Form PCT/ISA/210 (second sheet) (July 1998)